# FASCICULE DE BREVET EUROPEEN

(11) **EP 2 366 079 B1**
(45) Date de publication et mention de la délivrance du brevet: **30.10.2013**
(21) Numéro de dépôt: 09760941.6
(22) Date de dépôt: 17.11.2009
(51) Int. Cl.: F21V 33/00, D03D 15/00, E04B 2/74, G02B 6/00, G09F 13/14, F21V 8/00

(54) **PLAQUE LUMINEUSE**
LEUCHTPLATTE
LUMINOUS PLATE

(30) Priorité: 18.11.2008 FR 0806452
(43) Date de publication de la demande: 21.09.2011
(73) Titulaire: BPB Limited, Binley Business Park Coventry CV3 2TT (GB)
(72) Inventeur: PEREZ, Sylvie, F-92600 Asnieres (FR); BENKEMOUN, Yves, F-92500 Rueil-Malmaison (FR); TRUQUIN, Patrick, F-60810 Barbery (FR); RIVAUD, André, F-77360 Vaires-sur-Marne (FR)
(74) Mandataire: Kurtz, Laurent Charles Edmond
(86) Numéro de dépôt international: PCT/FR2009/001313
(87) Numéro de publication internationale: WO 2010/058095

(56) Documents cités:
- WO-A1-2004/057079
- WO-A1-2008/035010
- DE-A1- 10 206 613
- FR-A1- 2 808 473
- FR-A1- 2 887 996
- FR-A1- 2 909 159
- US-A- 5 568 964
- US-A1- 2006 087 864
- US-A1- 2007 281 155

## Description

La présente invention concerne une plaque lumineuse. Elle concerne plus particulièrement un support rigide, tel une plaque de parement, muni de moyens d'éclairage pouvant être mis en oeuvre pour réaliser une paroi verticale -dans le cas par exemple d'une cloison- ou bien une paroi horizontale -par exemple pour un plafond-.

Il est connu de réaliser un tissu, dit tissu lumineux, pour réaliser une source lumineuse étendue et répartie sur toute une surface, contrairement aux sources lumineuses habituelles qui sont soit ponctuelles (lampe à incandescence, lampe halogène, LED, ...) ou linéaires (tube néon, lampe halogène, ...). Un tissu lumineux et son procédé de tissage sont par exemple révélés dans le document FR- 2 859 737. Le document FR-2 907 194 prévoit quant à lui le collage d'un tissu lumineux sur un support rigide.

Le problème technique à l'origine de la présente invention est de fournir des moyens permettant de réaliser une paroi intégrant au moins un support rigide associé à un tissu lumineux. Il s'agit ici d'intégrer un support rigide recouvert d'un tissu lumineux dans une paroi horizontale ou verticale avec les contraintes existant dans le domaine du bâtiment.

À cet effet, la présente invention propose, comme dans le document US2006/0087864, un complexe comportant un support rigide revêtu d'un tissu lumineux, dans lequel le support rigide présente une face avant, une face arrière opposée à la face avant, un premier bord et un second bord opposé au premier, le tissu lumineux recouvrant au moins partiellement la face avant du support rigide en s'étendant du premier bord vers le second bord. Le tissu lumineux comporte des fibres optiques s'étendant sur la face avant du support rigide sensiblement perpendiculairement au premier bord et au second bord.

Selon la présente invention :
- des premières extrémités des fibres optiques sont repliées autour du premier bord vers la face arrière du support rigide, et
- des moyens de serrage sont prévus au niveau du premier bord et forment une pince venant enserrer les parties repliées des fibres optiques et le premier bord du support rigide.

L'invention prévoit ainsi des moyens permettant de tendre le tissu lumineux sur le support rigide. En outre, les moyens de serrage utilisés permettent avantageusement de protéger également les extrémités repliées des fibres optiques.

Une variante avantageuse de l'invention prévoit que des secondes extrémités des fibres optiques sont repliées autour du second bord vers la face arrière du support rigide, et que des moyens de serrage sont prévus au niveau du second bord et forment une pince venant enserrer les parties repliées des fibres optiques et le second bord du support rigide.

Dans un complexe selon l'invention, les premières -et éventuellement aussi les secondes- extrémités des fibres optiques sont connectées à un boîtier fixé sur la face arrière du support rigide et à l'intérieur duquel se trouvent des sources lumineuses.

Selon une première forme de réalisation d'un complexe selon l'invention, les moyens de serrage comportent par exemple une base reliant deux bras élastiques sensiblement parallèles. Une variante de réalisation prévoit que la base et les deux bras élastiques forment une pièce profilée d'un seul tenant tandis qu'une autre variante propose que la distance séparant les deux bras élastiques est réglable, et que des moyens de réglage correspondant sont intégrés dans la base.

Dans un complexe selon l'invention, le tissu lumineux est avantageusement recouvert d'une couche d'un matériau translucide. De la sorte, le tissu est invisible tant que les sources lumineuses correspondantes ne sont pas allumées et ne devient visible que lorsque les sources lumineuses rendent le tissu lumineux éclairant. Dans une telle variante de réalisation, l'invention prévoit avantageusement que les moyens de serrage enserrent également la couche de matériau translucide.

Dans un complexe selon l'invention, le support rigide est par exemple une plaque de plâtre.

Des détails et avantages de la présente invention ressortiront mieux de la description qui suit, faite en référence aux dessins schématiques annexés sur lesquels :
La figure 1 montre en vue de côté une première forme de réalisation d'une plaque lumineuse selon l'invention,
La figure 2 montre en vue de côté une variante de réalisation de la plaque de la figure 1,
La figure 3 est une vue en élévation montrant un exemple d'application d'une plaque de la figure 1 pour la réalisation d'une cloison verticale, et
La figure 4 est une vue schématique arrière à échelle agrandie montrant le bas de la plaque de la figure 3, sans la pince montrée sur la figure 3.

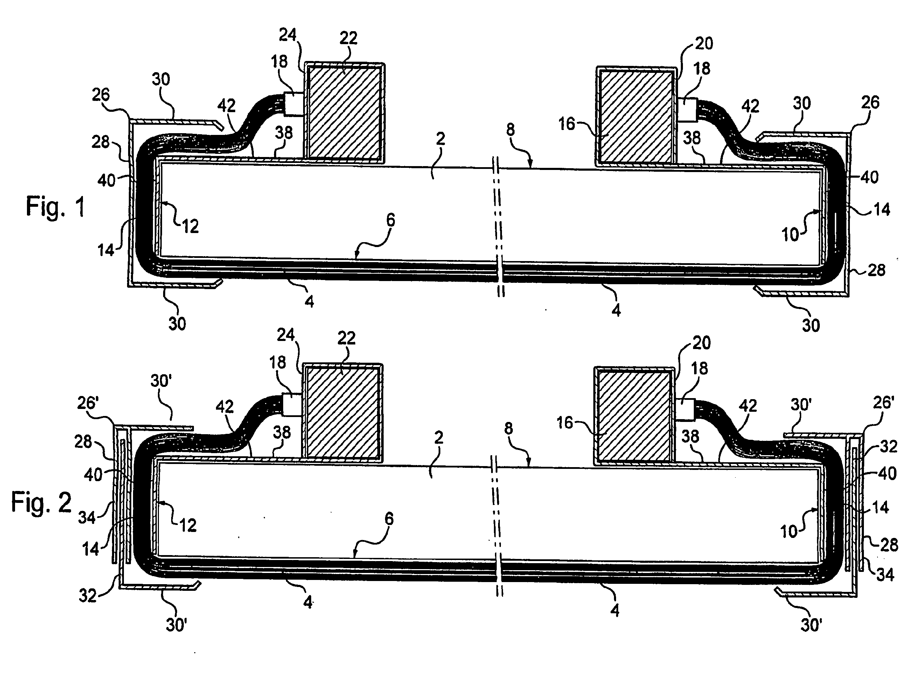

La figure 1 est une vue de côté d'une plaque lumineuse selon la présente invention. Cette plaque comporte un support rigide 2, un tissu lumineux 4 et ses accessoires ainsi que des moyens pour le montage du tissu lumineux 4 sur le support rigide 2.

Le support rigide 2 est par exemple une plaque de parement du type de celles utilisées pour la réalisation de parois, aussi bien des parois horizontales -plafonds- que des parois verticales -cloisons-. Il s'agit ainsi par exemple d'une plaque de plâtre telle les plaques connues sous l'appellation BA13 lorsqu'il s'agit d'une cloison.

Ce support rigide 2 comporte deux grandes faces et quatre bords. Une grande face est appelée face avant 6, l'autre grande face, opposée à la face avant 6, est appelée face arrière 8. La description qui suit fera principalement référence à un premier bord 10 et à un second bord 12 opposé au premier bord 10.

Le tissu lumineux 4 recouvre -au moins partiellement- la face avant 6 du support rigide 2. Selon une forme de réalisation, des fils de trame du tissu lumineux 4 sont des fibres optiques 14. Ces dernières dépassent de la surface du tissu lumineux 4 afin de pouvoir être raccordées chacune à une source lumineuse (non représentée). En variante, les fibres optiques pourraient être des fils de chaîne du tissu lumineux.

Dans la forme de réalisation représentée, des premières extrémités des fibres optiques 14 sont repliées à 180° autour du premier bord 10 vers la face arrière 8 du support rigide 2 et sont connectées à des sources lumineuses qui se trouvent à l'arrière du support rigide 2. Les sources lumineuses sont disposées dans un logement défini à l'intérieur d'un premier boîtier 16. Il s'agit par exemple de diodes électroluminescentes, connues également sous le nom de LED. Les fibres optiques 14 sont reliées par des connecteurs à écrou 18 de type connu de l'homme du métier, sur une plaque, dite plaque inférieure 20, du premier boîtier 16.

De manière similaire, des secondes extrémités des fibres optiques 14 sont repliées à 180° autour du second bord 12 vers la face arrière 8 du support rigide 2 et sont connectées à des sources lumineuses (non représentées) telles des LEDs disposées dans un logement défini à l'intérieur d'un second boîtier 22. Les fibres optiques 14 sont reliées par des connecteurs à écrou 18 sur une plaque, dite plaque supérieure 24, du boîtier 20.

Le premier boîtier 16 est par exemple réalisé à l'aide d'un profilé et éventuellement d'un couvercle. Il présente, dans une forme de réalisation préférée représentée sur les dessins, une forme parallélépipédique allongée et s'étend parallèlement au premier bord 10 (et au second bord 12) du support rigide 2. Le second boîtier 22 est similaire au premier boîtier 16.

Le premier boîtier 16, de même que le second boîtier 22, sont fixés sur la face arrière 8 du support rigide 2 Cette fixation peut être réalisée par tout moyen et dépend notamment du matériau dans lequel le support rigide est réalisé. Dans le cas d'un support rigide formé par une plaque de plâtre, on peut par exemple envisager de venir coller les boîtiers sur la face arrière 8 du support rigide 2.

Dans la forme de réalisation de la figure 1, le tissu lumineux 4 est tendu sur la face avant 6 du support rigide 2 et est maintenu tendu sur cette face avant 6 par deux pinces 26.

Chaque pince 26 se présente dans cette première forme de réalisation comme une pièce profilée d'un seul tenant présentant une section transversale en forme de U. Ainsi, une pince 26 présente une base 28 et deux branches 30.

La base 28 est par exemple plane et s'étend face au premier bord 10 ou au second bord 12 du support rigide 2 sur sensiblement toute la longueur du bord correspondant. Les branches 30 sont reliées à la base 28 de manière à pouvoir s'écarter l'une de l'autre élastiquement. Les extrémités libres des branches 30 sont légèrement repliées vers la branche 30 opposée formant ainsi une pince.

La pince 26 est configurée de telle sorte lorsqu'elle est au repos la distance séparant les extrémités libres légèrement repliées des branches 30 est inférieure à l'épaisseur du support rigide 2 augmentée de l'épaisseur du tissu lumineux 4 et des fibres optiques 14. Ainsi pour mettre en place une pince 26 comme représenté sur la figure 1, il convient d'écarter ses branches 30 qui viennent ensuite pincer le tissu lumineux 4 sur le support rigide 2. La pince 26 vient enserrer le bord correspondant du support rigide 2 en serrant le tissu lumineux 4 sur le support rigide 2. De par sa forme, la pince 26 vient aussi protéger la partie repliée à 180° des fibres optiques 14.

La figure 2 montre une variante de réalisation d'un complexe support rigide / tissu lumineux selon la présente invention. Ce complexe présente la même structure que celui de la figure 1. Toutefois, la pince 26 en une seule pièce de la figure 1 est remplacée ici par une pince 26' en deux parties.

La pince 26' reprend la structure de la pince 26 avec une base et deux branches 30'. Chacune des branches 30' est destinée à venir en appui contre une face du support rigide 2 en venant serrer contre cette face le tissu lumineux 4 ou les fibres optiques 14.

La base de la pince 26' permet de régler la distance séparant les deux branches 30'. Une première branche 30' est munie d'une pièce mâle 32 tandis que l'autre branche 30' est munie d'une pièce femelle 34 dans laquelle la pièce mâle 32 peut coulisser. Des moyens d'encliquetage (non représentés) sont par exemple prévus pour maintenir la pièce mâle 32 dans une position donnée assurant un bon serrage du tissu lumineux 4 sur la face avant 6 du support rigide 2 par rapport à la pièce femelle 34.

Un complexe formé d'un support rigide 2 et d'un tissu lumineux 4 et montré sur les figures 1 et 2 peut être mis en oeuvre tel que montré pour réaliser un plafond. Un tel complexe peut en effet venir reposer sur une structure réalisée sous un plancher pour recevoir des parements, appelés aussi dalles de plafond. Il suffit ici d'adapter la taille du support rigide 2 en tenant compte des pinces 26 ou 26' aux dimensions de la structure.

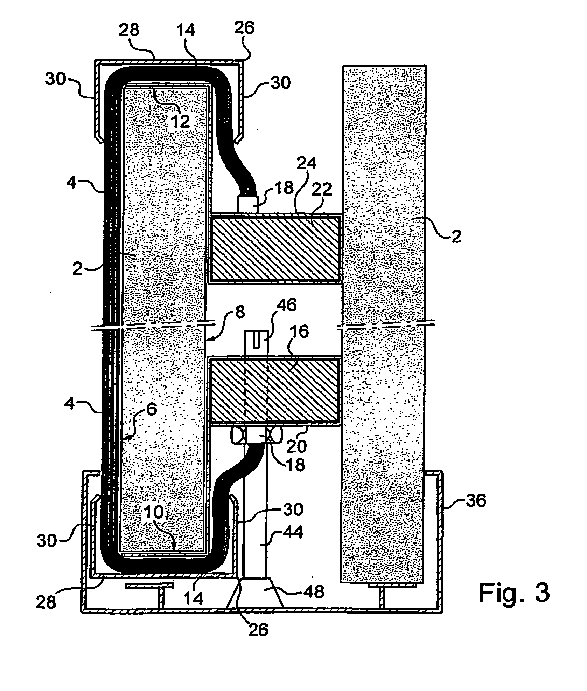

La figure 3 montre comment un complexe montré sur la figure 1 peut également être adapté pour la réalisation d'une paroi verticale, par exemple dans une cloison. La description qui suit est également valable pour un complexe tel celui de la figure 2 et même d'autres complexes intégrant un support rigide 2 et un tissu lumineux 4, lorsque par exemple le tissu lumineux 4 est collé sur le support rigide 2. De même, la figure 3 montre un complexe selon l'invention équipant une seule face de la cloison. Il est également possible, en adaptant notamment les boîtiers contenant les sources lumineuses, de prévoir un complexe selon l'invention sur deux faces d'une même cloison.

Dans le mode de réalisation représenté sur la figure 3, la cloison schématisée utilise des profilés tels ceux connus de l'homme du métier pour réaliser des cloisons démontables. De telles cloisons sont par exemple des cloisons appelées cloisons à couvre joint et commercialisées sous la marque Clipper. La description qui suit indique de quelle manière une face d'une telle cloison peut être rendue, au moins partiellement, lumineuse en utilisant par exemple un complexe représenté sur la figure 1.

De manière classique, une telle cloison comporte une lisse basse 36, une lisse haute non représentée, des montants verticaux non représentés ainsi que des supports rigides 2 qui sont par exemple des plaques de plâtre connues sous l'appellation BA13.

Dans la forme de réalisation représentée sur le dessin, un support rigide 2 est recouvert sur sa face avant 6 d'un tissu lumineux 4. Le premier boîtier 16 et le second boîtier 22 sont rendus solidaires chacun d'une cornière 38. Cette dernière comporte deux ailes : une première aile 40 vient recouvrir le bord correspondant du support rigide 2. La seconde aile 42 relie quant à elle le boîtier correspondant à la première aile 40 correspondante et s'étend le long de la face arrière du support rigide 2. Lorsque le complexe représenté sur la figure 1 est mis en position verticale pour réaliser une cloison, comme montré sur la figure 3, le premier bord 10 est positionné à l'horizontale en position inférieure et le second bord 10 devient alors le bord supérieur du support rigide. Ainsi, la première aile 40 de la cornière 38 correspondant au premier boîtier 16 sert de support au support rigide 2 et le premier bord 10, ou bord inférieur, du support rigide 2 vient reposer sur cette première aile 40.

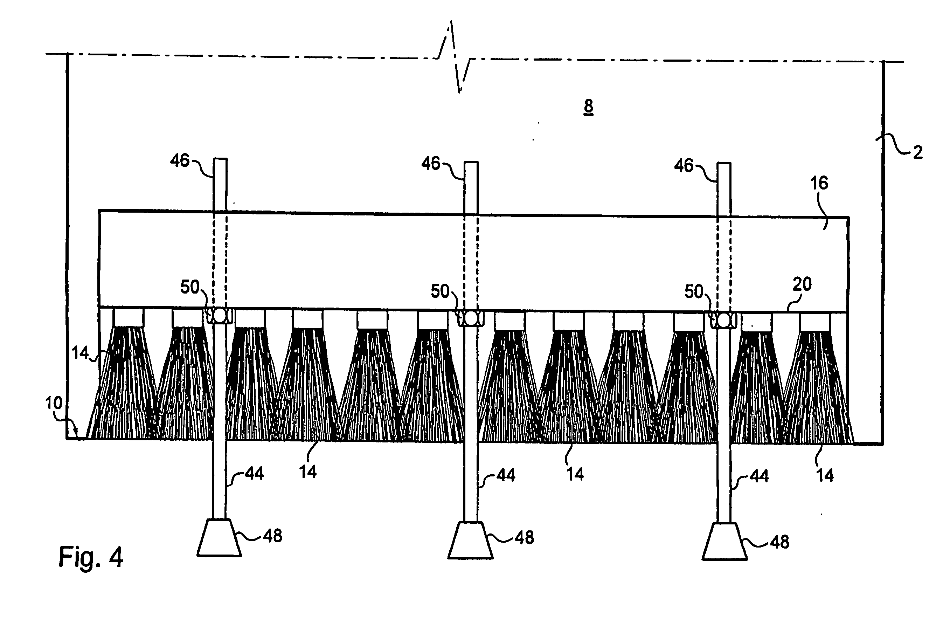

Comme représenté sur les figures, notamment les figures 3 et 4, le premier boîtier 16 est porté par des pieds 44. Chaque pied 44 comporte une tige filetée 46 traversant le premier boîtier 16 et une base d'appui 48. Un écrou 50 venant en appui sur la plaque inférieure 20 du premier boîtier 16 permet aux pieds 44 de porter le premier boîtier 16. Ce dernier étant solidaire de sa cornière 38 dont la première aile 40 porte le support rigide 2 correspondant, les pieds 44 portent ainsi l'ensemble formé par le support rigide 2 et le premier boîtier 16 contenant les sources lumineuses. Comme on peut le voir sur les dessins, lorsque les fibres optiques 14 contournent le premier bord 10, ou bord inférieur du support rigide 2, elles passent à l'extérieur de la cornière 38 (et non pas entre la cornière et le support rigide). De la sorte, le montage ainsi réalisé permet un montage libre des fibres optiques 14 sans venir les contraindre notamment par le poids du support rigide 2. En outre, comme déjà mentionné plus haut, la pince 26 vient également protéger les fibres optiques 14, et plus particulièrement la partie repliée à 180° des extrémités des fibres optiques 14.

Les pieds 44 viennent reposer par leur base d'appui 48 à l'intérieur de la lisse basse 36.

Pour alimenter les sources lumineuses se trouvant dans le premier boîtier 16 et dans le second boîtier 22, un transformateur non représenté est également prévu. Un même transformateur peut être prévu pour le premier boîtier 16 et pour le second boîtier 22. Il est aussi envisageable d'avoir un transformateur pour chacun des boîtiers. Ce transformateur peut, dans ce second cas, être par exemple intégré dans chacun des boîtiers. Dans les deux cas de figure, le(s) transformateur(s) peut être placé entre les deux supports rigides formant la cloison représentée. Chaque transformateur doit être alimenté en énergie électrique. Ceci est par exemple réalisé par un fil circulant dans la lisse basse 36.

Dans une forme de réalisation préférée, le premier boîtier 16 et le second boîtier 22 sont dimensionnés de telle sorte qu'ils puissent chacun remplir la fonction d'écarteur entre les deux supports rigides de la cloison. Le support rigide 2 ne portant pas de tissu lumineux vient alors en appui contre le premier boîtier 16 et contre le second boîtier 22. Ainsi, les deux supports rigides 2 sont maintenus en position d'une part par le premier boîtier 16 et le second boîtier 22 et d'autre part par les lisses de la cloison.

Les formes de réalisation représentées sur les dessins prévoient d'avoir des sources lumineuses à chacune des extrémités des fibres optiques 14. Ainsi, les fibres optiques du tissu lumineux 4 sont alimentées en lumière par leurs deux extrémités. Ceci permet d'avoir une répartition sensiblement uniforme de la lumière sur toute la surface du tissu en supprimant les atténuations qui pourraient apparaître aux extrémités des fibres optiques éloignées des sources lumineuses.

En fonction de la hauteur de la cloison, et notamment de la hauteur recouverte par du tissu lumineux 4, ainsi que dans le cas par exemple de dalles de plafond, il peut être envisagé de n'avoir qu'un seul boîtier avec des sources lumineuses lorsque cette hauteur est moindre. Dans ce cas, il est inutile de faire dépasser les fibres optiques 14 sur deux bords opposés du tissu lumineux 4. Du côté où les fibres optiques 14 ne dépassent pas, et ne sont donc pas repliées, l'utilisation d'une pince 26, 26' ou similaire n'est pas forcément nécessaire. D'autres moyens de fixation peuvent alors être prévus pour fixer l'extrémité correspondante du tissu lumineux 4 sur la face avant 6 du support rigide 2. Une pince 26, 26' ou des moyens de serrage similaires sont prévus uniquement du côté où les fibres optiques 14 sont repliées vers l'arrière du support rigide 2.

Le tissu lumineux 4 peut former une grande surface lumineuse répartie sur toute la face avant 6 du support rigide. Dans certains cas toutefois, seule une partie du tissu lumineux sera éclairée lorsque les sources lumineuses sont allumées. En effet, il peut être envisagé de ne faire apparaître de la lumière que sur une partie du tissu lumineux pour représenter un dessin, un logo, une indication, ... Dans ce dernier cas, pour rendre le motif destiné à être éclairé invisible lorsque les sources lumineuses sont éteintes, il est proposé de recouvrir le tissu lumineux 4 d'une couche translucide. Il peut par exemple s'agir d'une couche d'un papier dont la couleur correspond par exemple à la couleur du tissu lumineux. Il peut également s'agir d'une feuille en matière synthétique réalisée dans un matériau diffusant la lumière. D'autres matériaux peuvent être envisagés comme par exemple un tissu fin.

Les différentes formes de réalisation décrites ci-dessus permettent de fournir un complexe intégrant un support rigide et un textile lumineux qui puisse être utilisé comme parement pour la réalisation de parois verticales ou horizontales, de cloisons et de plafonds. La solution proposée ci-dessus présente l'avantage de pouvoir s'intégrer dans un système d'ossature "classique" d'une cloison ou d'un plafond. L'adaptation est donc aisément réalisable et son prix de revient est limité.

L'utilisation d'un tel système permet également d'avoir un ensemble démontable qui permet de réaliser l'entretien des composants associés au tissu lumineux. En effet, les parements intégrant un tissu lumineux peuvent se démonter exactement de la même manière que les parements "simples" de l'art antérieur qu'il est possible de combiner avec des complexes selon la présente invention pour la réalisation d'un plafond ou d'une cloison.

Le complexe selon l'invention permet de protéger les fibres optiques là où elles sont le plus fragile, c'est-à-dire dans la zone où elles sont repliées. En outre, le montage proposé pour réaliser une cloison permet d'éviter de les contraindre mécaniquement, notamment par le poids du parement réalisé.

Dans le cas d'une utilisation pour réaliser une cloison, les boîtiers utilisés pour accueillir les sources lumineuses permettent d'une part, pour le boîtier disposé en bas, de porter le support rigide correspondant et d'autre part de réaliser l'écartement avec un autre support rigide formant la cloison.

La présente invention ne se limite pas aux formes de réalisation et à leurs variantes décrites ci-dessus à titre d'exemples non limitatifs. Elle concerne également toutes les variantes de réalisation à portée de l'homme du métier dans le cadre des revendications ci-après.

Ainsi, on ne sortirait pas du cadre de l'invention en utilisant un tissu lumineux d'un type différent de celui décrit plus haut. Le support pour ce tissu peut être également différent d'une plaque de plâtre. Tout support rigide apte à être intégré dans la réalisation d'une cloison, et tel par exemple un panneau mélaminé, pourrait également convenir.

La description faite ci-dessus est adaptée plus particulièrement à une ossature de cloison commercialisée sous la marque Clipper. Toutefois, l'invention peut s'appliquer également à d'autres ossatures, et de préférence à des ossatures pour cloisons démontables et/ou amovibles.

Les formes de réalisation des moyens de serrage sont également données à titre illustratif et non limitatif. Au lieu ainsi d'avoir par exemple un élément profilé s'étendant sensiblement sur tout le bord correspondant du support rigide, il peut être par exemple envisager d'avoir plusieurs dispositifs de serrage de taille réduite répartis le long du bord du support rigide pour maintenir le tissu lumineux.

## Revendications

1. Complexe comportant un support rigide (2) revêtu d'un tissu lumineux (4), dans lequel le support rigide (2) présente une face avant (6), une face arrière (8) opposée à la face avant (6), un premier bord (10) et un second bord (12) opposé au premier, le tissu lumineux (4) recouvrant au moins partiellement la face avant (6) du support rigide (2) en s'étendant du premier bord (10) vers le second bord (12), et comportant des fibres optiques (14) s'étendant sur la face avant (6) du support rigide (2) sensiblement perpendiculairement au premier bord (10) et au second bord (12),
**caractérisé en ce que** des premières extrémités des fibres optiques (14) sont repliées autour du premier bord (10) vers la face arrière (8) du support rigide (2), et
**en ce que** des moyens de serrage (26, 26') sont prévus au niveau du premier bord (10) et forment une pince venant enserrer les parties repliées des fibres optiques (14) et le premier bord (10) du support rigide (2).

2. Complexe selon la revendication 1, **caractérisé en ce que** des secondes extrémités des fibres optiques (14) sont repliées autour du second bord (12) vers la face arrière (8) du support rigide (2), et **en ce que** des moyens de serrage (26, 26') sont prévus au niveau du second bord (12) et forment une pince venant enserrer les parties repliées des fibres optiques (14) et le second bord (12) du support rigide (2).

3. Complexe selon l'une des revendications 1 ou 2, **caractérisé en ce que** les premières extrémités des fibres optiques (14) sont connectées à un boîtier (16) fixé sur la face arrière (8) du support rigide (2) et à l'intérieur duquel se trouvent des sources lumineuses.

4. Complexe selon la revendication 2, **caractérisé en ce que** les secondes extrémités des fibres optiques (14) sont connectées à un boîtier (22) fixé sur la face arrière (8) du support rigide (2) et à l'intérieur duquel se trouvent des sources lumineuses.

5. Complexe selon l'une des revendications 1 à 4, **caractérisé en ce que** les moyens de serrage (26, 26') comportent une base (28) reliant deux bras élastiques (30, 30') sensiblement parallèles.

6. Complexe selon la revendication 5, **caractérisé en ce que** la base (28) et les deux bras élastiques (30) forment une pièce profilée d'un seul tenant.

7. Complexe selon la revendication 5, **caractérisé en ce que** la distance séparant les deux bras élastiques (30') est réglable, et **en ce que** des moyens de réglage correspondant sont intégrés dans la base (28).

8. Complexe selon l'une des revendications 1 à 7, **caractérisé en ce que** le tissu lumineux (4) est recouvert d'une couche d'un matériau translucide.

9. Complexe selon la revendication 8, **caractérisé en ce que** les moyens de serrage (26, 26') enserrent également la couche de matériau translucide.

10. Complexe selon l'une des revendications 1 à 9, **caractérisé en ce que** le support rigide (2) est une plaque de plâtre.

11. Complexe selon l'une des revendications 1 à 10, **caractérisé en ce que** le support rigide (2) est une plaque de parement.

12. Paroi verticale ou horizontale comportant un complexe selon l'une des revendications 1 à 11.

13. Paroi selon la revendication 12, **caractérisée en ce qu'**il s'agit d'une cloison ou d'un plafond.

## Patentansprüche

1. Anordnung, enthaltend einen starren Träger (2), der mit einem Leuchtgewebe (4) überzogen ist, wobei der starre Träger (2) eine Vorderseite (6), eine der Vorderseite (6) entgegengesetzte Hinterseite (8), einen ersten Rand (10) und einen dem ersten Rand entgegengesetzten zweiten Rand (12) aufweist, wobei das Leuchtgewebe (4) zumindest teilweise die Vorderseite (6) des starren Trägers (2) überdeckt und sich vom ersten Rand (10) zum zweiten Rand (12) erstreckt, sowie Lichtleitfasern (14), die sich an der Vorderseite (6) des starren Trägers (2) im Wesentlichen senkrecht zum ersten Rand (10) und zum zweiten Rand (12) erstrecken,
**dadurch gekennzeichnet, dass**
die ersten Enden der Lichtleitfasern (14) um den ersten Rand (10) herum zur Hinterseite (8) des starren Trägers (2) hin umgelegt sind, und
dass Klemmmittel (26, 26') im Bereich des ersten Rands (10) vorgesehen sind und eine Klemme bilden, welche die umgelegten Teile des Lichtleitfasern (14) und den ersten Rand (10) des starren Trägers (2) verspannt.

2. Anordnung nach Anspruch 1,
**dadurch gekennzeichnet, dass** die zweiten Enden der Lichtleitfasern (14) um den zweiten Rand (12) zur Hinterseite (8) des starren Trägers (2) hin umgelegt sind und dass Klemmmittel (26, 26') im Bereich des zweiten Randes (12) vorgesehen sind und eine Klemme bilden, welche die umgelegten Teile der Lichtleitfasern (14) und den zweiten Rand (12) des starren Trägers (2) verspannt.

3. Anordnung nach einem der Ansprüche 1 oder 2,
**dadurch gekennzeichnet, dass** die ersten Enden der Lichtleitfasern (14) mit einem Gehäuse (16) verbunden sind, das an der Hinterseite (8) des starren Trägers (2) befestigt ist und in welchem sich Lichtquellen befinden.

4. Anordnung nach Anspruch 2,
**dadurch gekennzeichnet, dass** die zweiten Enden der Lichtleitfasern (14) mit einem Gehäuse (22) verbunden sind, das an der Hinterseite (8) des starren Trägers (2) befestigt ist und in welchem sich Lichtquellen befinden.

5. Anordnung nach einem der Ansprüche 1 bis 4,
**dadurch gekennzeichnet, dass** die Klemmmittel (26, 26') ein Basisteil (28) aufweisen, das zwei elastische Arme (30, 30') verbindet, die im Wesentlichen parallel verlaufen.

6. Anordnung nach Anspruch 5,
**dadurch gekennzeichnet, dass** das Basisteil (28) und die beiden elastischen Arme (30) ein einstückiges Profilteil bilden.

7. Anordnung nach Anspruch 5,
**dadurch gekennzeichnet, dass** der Abstand, der die beiden elastischen Arme (30') trennt, einstellbar ist und dass entsprechende Einstellmittel in das Basisteil (28) integriert sind.

8. Anordnung nach einem der Ansprüche 1 bis 7,
**dadurch gekennzeichnet, dass** das Leuchtgewebe (4) mit einer Schicht aus einem lichtdurchlässigen Material überzogen ist.

9. Anordnung nach Anspruch 8,
**dadurch gekennzeichnet, dass** die Klemmmittel (26, 26') auch die Schicht aus lichtdurchlässigem Material verspannen.

10. Anordnung nach einem der Ansprüche 1 bis 9,
**dadurch gekennzeichnet, dass** der starre Träger (2) eine Gipsplatte ist.

11. Anordnung nach einem der Ansprüche 1 bis 10,
**dadurch gekennzeichnet, dass** der starre Träger (2) eine Verkleidungsplatte ist.

12. Vertikale oder horizontale Wand mit einer Anordnung nach einem der Ansprüche 1 bis 11.

13. Wand nach Anspruch 12,
**dadurch gekennzeichnet, dass** es sich um eine Zwischenwand oder um eine Decke handelt.

## Claims

1. Complex including a rigid support (2) covered with a luminous fabric (4), in which the rigid support (2) has a front face (6), a rear face (8) opposite the front face (6), a first edge (10), and a second edge (12) opposite the first edge, the luminous fabric (4) at least partly covering the front face (6) of the rigid support (2), extending from the first edge (10) toward the second edge (12), and including optical fibers (14) extending over the front face (6) of the rigid support (2) substantially perpendicular to the first edge (10) and the second edge (12),
**characterized in that** first ends of the optical fibers (14) are bent around the first edge (10) toward the rear face (8) of the rigid support (2), and
**in that** gripping means (26, 26') are provided on the first edge (10) and form a clamp for gripping the bent parts of the optical fibers (14) and the first edge (10) of the rigid support (2).

2. Complex according to claim 1, **characterized in that** second ends of the optical fibers (14) are bent around the second edge (12) toward the rear face (8) of the rigid support (2) and **in that** gripping means (26, 26') are provided on the second edge (12) and form a clamp for gripping the bent parts of the optical fibers (14) and the second edge (12) of the rigid support (2).

3. Complex according to either of claims 1 or 2, **characterized in that** the first ends of the optical fibers (14) are connected to a casing (16) fixed to the rear face (8) of the rigid support (2) and inside which are light sources.

4. Complex according to claim 2, **characterized in that** the second ends of the optical fibers (14) are connected to a casing (22) fixed to the rear face (8) of the rigid support (2) and inside which are light sources.

5. Complex according to any of claims 1 to 4, **characterized in that** the gripping means (26, 26') include a base (28) joining two substantially parallel elastic arms (30, 30').

6. Complex according to claim 5, **characterized in that** the base (28) and the two elastic arms (30) form a one-piece structural section.

7. Complex according to claim 5, **characterized in that** the distance between the two elastic arms (30') can be adjusted and **in that** the base (28) incorporates corresponding adjustment means.

8. Complex according to any of claims 1 to 7, **characterized in that** the luminous fabric (4) is covered with a layer of translucent material.

9. Complex according to claim 8, **characterized in that** the gripping means (26, 26') also grip the layer of translucent material.

10. Complex according to any of claims 1 to 9, **characterized in that** the rigid support (2) is a sheet of plasterboard.

11. Complex according to one of Claims 1 to 10, **characterized in that** the rigid support (2) is a cladding panel.

12. Vertical or horizontal wall comprising a complex according to one of Claims 1 to 11.

13. Wall according to Claim 12, **characterized in that** it is an interior wall or a ceiling.
